Europäisches Patentamt

European Patent Office

Office européen des brevets

(19)

(11) **EP 0 921 847 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **97931797.1**

(22) Anmeldetag: **08.07.1997**

(51) Int Cl.⁷: **B01D 15/08**, B01J 8/04, B01D 53/04, G01N 30/48

(86) Internationale Anmeldenummer:
**PCT/EP97/03601**

(87) Internationale Veröffentlichungsnummer:
**WO 98/003242 (29.01.1998 Gazette 1998/04)**

(54) **VERWENDUNG NICHT-PARTIKULÄRER SORBENTIEN FÜR "SIMULATED MOVING BED" TRENNVERFAHREN**

USE OF NON-PARTICULATE SORBENTS FOR SIMULATED MOVING BED SEPARATING METHODS

UTILISATION DE SORBANTS NON PARTICULAIRES POUR DES PROCEDES DE SEPARATION A "LIT MOBILE SIMULE"

(84) Benannte Vertragsstaaten:
**AT CH DE FR GB LI**

(30) Priorität: **19.07.1996 DE 19629208**
**20.06.1997 DE 19726151**

(43) Veröffentlichungstag der Anmeldung:
**16.06.1999 Patentblatt 1999/24**

(73) Patentinhaber: **MERCK PATENT GmbH**
**64293 Darmstadt (DE)**

(72) Erfinder:
• **MÜLLER, Egbert**
**D-64390 Erzhausen (DE)**
• **SCHULTE, Michael**
**D-64428 Rüsselsheim (DE)**
• **WIELAND, Gerhard**
**D-64625 Bensheim (DE)**
• **CABRERA, Karin**
**D-63303 Dreieich (DE)**
• **DELP, Axel**
**D-64407 Fränkisch Crumbach (DE)**
• **LUBDA, Dieter**
**D-64625 Bensheim (DE)**

(56) Entgegenhaltungen:
WO-A-94/19687     WO-A-95/03256
DE-A- 4 028 326     US-A- 2 985 589
US-A- 4 533 398

EP 0 921 847 B1

**Beschreibung**

Die Erfindung betrifft die Verwendung von Membranen als Sorbentien, insbesondere solchen, die Separationseffektoren enthalten, für "Simulated Moving Bed" Trennverfahren.

Für die Wirtschaftlichkeit von präparativen Stofftrennungen sind die Erzielung hoher Flußraten, kurzer Elutionszeiten und die Einhaltung moderater Betriebsdrücke wesentliche Faktoren. Bei präparativen Stofftrennungen haben Gegenstromverfahren an Bedeutung gewonnen. Da es technisch nur sehr schwer möglich ist, eine tatsächliche Bewegung einer stationären Phase zu realisieren, wird die Bewegung der stationären Phase simuliert. Dazu wird das gesamte Säulenbett in zyklisch hintereinandergeschaltete Einzelsäulen unterteilt. Die Gesamtzahl der Säulen ist typischerweise ein Vielfaches von vier, da ein solches System vier chromatographische Zonen besitzt. Nach einer definierten Zeit werden die Leitungen umgeschaltet, wodurch eine Bewegung des Säulenbettes in der entgegengesetzten Richtung simuliert wird. Für das kontinuierliche Verfahren der "simulated moving bed"- Chromatographie (SMB-Chromatographie) werden üblicherweise als Trennmaterialien partikuläre Sorbentien verwendet. Die dabei verwendeten Säulenpackungen lassen keine optimalen Flußraten zu, da der Betriebsdruck bei partikulären Trägern sehr hoch ist. Auch ist die mechanische Stabilität der partikulären Sorbensbetten nicht sehr gut. Weiterhin ist es für die SMB-Chromatographie notwendig, eine Reihe chromatographischer Säulen (typischerweise bis zu 24) mit möglichst gleichen Eigenschaften bereitzustellen. Dies ist bei partikulären Sorbensbetten nur mit großem Aufwand beim Packen der Säulen und bei der Auswahl der gepackten Säulen realisierbar.

Aufgabe der Erfindung ist es, chromatographische präparative Trennverfahren für die SMB-Verfahren bereitzustellen, die bei moderatem Betriebsdruck hohe Flußraten aufweisen. Somit kann ein höherer Durchsatz pro Zeiteinheit erzielt werden.

Es wurde gefunden, daß nicht-partikuläre Sorbentien, insbesondere monolithische Sorbentien oder Sorbentien auf der Grundlage von derivatisierten Membranen, für Trennverfahren mit hohen Flußraten eingesetzt werden können; somit kann bei niederem Betriebsdruck ein höherer Durchsatz pro Zeiteinheit erzielt werden.

Gegenstand der Erfindung sind Verfahren zur präparativen chromatographischen Trennung mindestens zweier Substanzen nach dem SMB-Verfahren, wobei als stationäre Phase ein Sorbens auf der Grundlage von derivatisierten Membranen gemäß Ansprüchen 1 und 2, verwendet wird.

Abbildung 1 zeigt eine schematische Darstellung des Verfahrens der Gegenstromchromatographie, das die Grundlage der "simulated moving bed"-Chromatographie (SMB-Chromatographie) darstellt.

Abbildungen 2a) bis 2c) zeigen eine präparative Trennung eines Testgemisches aus Tolulol, 2-Nitroacetanilid und 3-Nitroacetanilid bei unterschiedlichen Fließgeschwindigkeiten der mobilen Phase (Abb. 2a: 40 ml/min; Abb. 2b: 130 ml/min; Abb. 2c: 200 ml/min). Experimentelle Einzelheiten sind in Beispiel 1 beschrieben.

Abbildung 3 zeigt die Trennung von Dimethylphthalat/Dibutylphthalat an einer $C_{18}$-RP-Phase. Experimentelle Einzelheiten sind in Beispiel 2 beschrieben.

Abbildung 4 zeigt das Elutionsdiagramm einer Trennung von Chymotrypsinogen A und Lysozym nach dem SMB-Verfahren an einem Trennmittel aus porösem modifizierten Polyamid, das $SO_3^-$-Gruppen als Separationseffektoren enthält, wobei die $SO_3^-$-Gruppen über eine Brückengruppierung an die Aminogruppen des Polyamids gebunden sind. Experimentelle Einzelheiten sind in Beispiel 3 beschrieben.

Gebräuchliche partikuläre Sorbentien bestehen aus diskreten Sorbensteilchen, die in ein durch Filterelemente abschlossenes Rohr eingefüllt werden und das Sorbensbett ergeben. Partikuläre Sorbentien bestehen aus spherischen oder unregelmäßig geformten Partikeln, deren Partikeldimensionen im Bereich von ca. 1 µm bis zu 1 mm, insbesondere von 5 µm bis 500 µm, liegen. Dabei ist die erreichbare Trennstufenhöhe abhängig von der Partikelgröße und wird mit niedrigerer Partikelgröße geringer, d.h. die erreichbare chromatographische Auflösung wird besser. Allerdings steigt mit fallender Partikelgröße der Druckabfall bei gleichem linearen Fluß an, so daß bei kleinen Partikeln der lineare Fluß durch den handhabbaren Betriebsdruck begrenzt ist. Außerdem beobachtet man bei partikulären Sorbentien eine ausgeprägte Abhängigkeit der Trennleistung vom linearen Fluß (steile H/u-Kurven). Insgesamt weisen die für die Trennleistung und Wirtschaftlichkeit relevanten Parameter bei partikulären Sorbentien eine starke gegenseitige Abhängigkeit auf, die die Prozeßoptimierung insbesondere für präparative Anwendungen erschwert. Im Gegensatz zu gebräuchlichen partikulären Sorbentien, bei deren Verwendung stets ein Kompromiß zwischen Druckabfall in der sorbensgefüllten Säule, erreichbare Trennstufenhöhe und Abhängigkeit der Trennleistung vom linearen Fluß (H/u-Kurve) eingegangen werden muß, zeigt es sich, daß diese Parameter bei nicht-partikulären Sorbentien wesentlich weniger streng gekoppelt sind.

Es zeigte sich überraschenderweise, daß bei der Verwendung von nicht-partikulären, insbesondere monolithischen Sorbentien die H/u-Kurven flach sind. Weiterhin werden bei nicht-partikulären Sorbentien, die einen geringen Druckabfall verursachen, niedrige Trennstufenhöhen gefunden. Dadurch lassen sich präparativ-chromatographische Trennverfahren, insbesondere solche nach dem SMB-Verfahren, unter Verwendung von nicht-partikulären Sorbentien wesentlich besser als bei Verwendung von partikuläre Sorbentien optimieren; die Wirtschaftlichkeit dieser Prozesse kann bedeutend verbessert werden.

Der hier verwendete Begriff "nicht-partikuläre" Sorbentien stellt den Gegensatz zu bekannten oben gekennzeichneten partikulären Sorbentien dar, bei denen das Sorbensbett aus einzelnen diskreten Partikeln besteht. Sowohl monolithische Sorbentien als auch mit Separationseffektoren derivatisierte Membranen werden von dem Begriff nicht-partikuläre Sorbentien umfaßt.

Monolithische Sorbentien sind grundsätzlich aus der Literatur bekannt; dazu gehören vor allem poröse keramische Formkörper, wie sie in WO 94/19 687 und in WO 95/03 256 offenbart sind. Von dem Begriff monolithische Sorbentien werden im weiteren Sinn auch Formkörper aus Polymerisaten umfaßt, wie sie in EP 0 407 560 und von F. Svec und J.M. Frechet (1992) Anal. Chem. **64**, Seiten 820 - 822, und von S. Hjerten et al. (1989) J. Chromatogr. **473**, Seiten 273 - 275, beschrieben wurden. Besonders bevorzugt sind monolithische Sorbentien auf der Grundlage von porösen Formkörpern, die untereinander verbundene Makroporen sowie Mesoporen in den Wänden der Makroporen aufweisen, wobei der Durchmesser der Makroporen einen Medianwert größer als 0,1 μm aufweist, und wobei der Durchmesser der Mesoporen einen Medianwert von 2 und 100 nm aufweist. Derartige monolithische Sorbentien und Verfahren zu ihrer Herstellung sind beispielsweise in WO 95/03 256 offenbart.

Monolithische Sorbentien bestehen also aus Materialien, wie sie für partikuläre Sorbentien im Gebrauch sind. In vielen Fällen (z.B. $SiO_2$) können diese Sorbentien ohne weiteres für chromatographische Trennungen verwendet werden. Häufiger jedoch werden die Basisträger derivatisiert, um die Trenneigenschaften zu verbessern; dabei werden zusätzliche Gruppierungen eingeführt, die unter der Bezeichnung Separationseffektoren zusammengefaßt werden, und die für die Trennung der Analyte wesentlich sind.

Mit Separationseffektoren derivatisierte adsorptiv wirksame Membranen sind in WO 91/03 506 und in WO 96/22 316. sowie in WO 97 149 754 offenbart. Erfindungsgemäß ist die Verwendung der in WO 96/22 316 und in WO 97 149 754 offenbarten derivatisierten Polyamidmembranen. Verfahren zur Herstellung dieser Membranen sind in diesen Druckschriften angegeben. Derartige Membranen werden üblicherweise in Vorrichtungen eingesetzt, die sich im wesentlichen wie chromatographische Säulen handhaben lassen. Besonders bevorzugt ist die Verwendung einer Vorrichtung, wie sie in DE 196 03 523.6 (AKZO-Nobel) offenbart ist.

Separationseffektoren und Verfahren zu ihrer Einführung in den Basisträger sind dem Fachmann grundsätzlich bekannt.

Beispiele für Reaktionen, mit denen Separationseffektoren in $SiO_2$ oder ähnliche oxidische Basisträger eingeführt werden können, sind:

a) Die Derivatisierung mit Silanderivaten der Formel I

$$SiX_nR^1_{(3-n)}R^2 \qquad\qquad\qquad I$$

worin

X  Methoxy, Ethoxy oder Halogen oder Aminoderivate,
$R^1$  $C_1$-$C_5$-Alkyl,
n  1, 2 oder 3

bedeuten und

$R^2$  eine der im folgenden angegebene Bedeutungen besitzt:

a1) unsubstituiertes oder substituiertes Alkyl oder Aryl, wie z.B. n-Octadecyl, n-Octyl, Benzyl- oder Cyanopropyl;
a2) anionische oder saure Reste, wie z.B. Carboxypropyl;
a3) kationische oder basische Reste, wie z.B. Aminopropyl, Diethylaminopropyl oder Triethylammoniumpropyl;
a4) hydrophile Reste, wie z.B. (2,3-Dihydroxypropyl)-oxypropyl;
a5) bindungsfähige aktivierte Reste, wie z.B. (2,3-Epoxypropyl)-oxypropyl.

b) Die Adsorption oder chemische Bindung von Polymeren wie Polybutadien, Siloxanen, Polymeren auf der Grundlage von Styrol/ Divinylbenzol, von (Meth)acrylsäurederivaten oder von anderen Vinylverbindungen, sowie von Peptiden, Proteinen, Polysacchariden und Polysaccharidderivaten an dem Basisträger;

c) Die chemische Bindung von unter b) genannten Polymeren über die unter a) genannten Derivate; dazu gehören Pfropfpolymerisate von Poly(meth)acrylsäurederivaten auf diolmodifiziertem Kieselgel nach EP-B-0 337 144.

d) Die Adsorption oder chemische Bindung von chiralen Phasen, wie z.B. von Aminosäurederivaten, Peptiden oder Proteinen, oder von Cyclodextrinen, Polysacchariden oder Polysaccharidderivaten.

Weitere gebräuchliche Derivatisierungsmöglichkeiten und Derivatisierungsverfahren sind dem Fachmann bekannt und in gängigen Handbüchern wie Unger, K.K. (ed) Porous Silica, Elsevier Scientific Publishing Company (1979) oder Unger, K.K. Packings and Stationary Phases in Chromatographic Techniques, Marcel Dekker (1990) beschrieben.
Weitere Beispiele für verschiedene Separationseffektoren und für Verfahren, die Separationseffektoren in Sorbentien einzuführen, sind in den folgenden Druckschriften genannt:

a) Aus DE 38 11 042 sind unter anderem Monomere bekannt, die zur Herstellung von Ionenaustauschem geeignet sind; dazu gehören beispielsweise Acrylsäure, N-(Sulfoethyl)-acrylamid, 2-Acrylamido-2-methylpropansulfonsäure, N,N-Dimethylaminoethyl-acrylamid; N,N-Diethylaminoethyl-acrylamid, sowie Trimethylammoniumethyl-acrylamid.
Andere in dieser Druckschrift genannte Monomere erlauben die Bindung von Affinitatsliganden, oder eignen sich für reversed phase Chromatographie: dazu gehören beispielsweise Acrylsäure, Acrylamid, Allylamin oder Acrylnitril.

b) Aus DE 43 10 964 sind Monomere bekannt, die einen Oxiranring, einen Azlactonring oder eine Gruppierung enthalten, die in einen Azlactonring umgesetzt werden kann. Polymere, die derartige Monomere enthalten, sind besonders gut für die Bindung von Affinitätsliganden geeignet. Affinitätsliganden sind beispielhaft in DE 43 10 964 offenbart.
Weiterhin können die Epoxidgruppen in derartigen Polymeren in vorteilhafter Weise weiter umgesetzt werden, wodurch Ionenaustauscher, thiophile Sorbentien oder Sorbentien für die Metallchelat- oder die hydrophobe Chromatographie bereitgestellt werden. Dabei werden beispielsweise Phosphorsäure, Diethylamin, Trimethylamin, schweflige Säure oder auch Komplexbildner wie Iminodiessigsäure an den Oxiranring addiert.
Die Herstellung von thiophilen Sorbentien und von Sorbentien für die Metallchelatchromatographie ist in DE 43 10 964 offenbart.
In DE 43 33 674 und in DE 43 33 821 sind derartige Umsetzungen, mit derer Hilfe Ionenaustauscher bereitgestellt werden können, offenbart.
In DE 43 23 913 werden Sorbentien für die hydrophobe Interaktionschromatographie beschrieben.

Chirale Trennmaterialien für die Trennung von Enantiomeren sind in großer Anzahl im Stand der Technik bekannt. Es handelt sich ausschließlich um partikuläre Trenrimaterialien. Die bekannten chiralen Trennmaterialien bestehen entweder aus der chiralen Verbindung selbst (zum Beispiel Cellulosetriacetat) oder aber ein chiraler Separationseffektor ist auf einen Träger aufgezogen oder chemisch an einen Träger gebunden. Außerdem ist es möglich, chirale Separationseffektoren, die mit einer stationären Phase in Wechselwirkung treten, im Elutionsmittel zuzusetzen (dynamische Belegung).
Chirale Separationseffektoren sind in großer Zahl bekannt; die wichtigsten Gruppen bekannter chiraler Separationseffektoren sind:

a) Aminosäuren und ihre Derivate, z.B. L-Phenylalanin. oder D-Phenylalanin, Ester oder Amide von Aminosäuren oder acylierte Aminosäuren oder Oligopeptide;
b) natürliche und synthetische Polymere mit einer Asymmetrie oder Dissymmetrie in der Hauptkette; dazu gehören Proteine (z.B. saures $\alpha_1$-Glycoprotein, Rinderserumalbumin, Cellulase; siehe J. Chrom. **264**, Seiten 63 -68 (1983), J. Chrom. **269**, Seiten 71 - 80 (1983), WO 91/12 221), Cellulose und Cellulosederivate, sowie andere Polysaccharide und deren Derivate (z.B. Cellulosetribenzoat, Cellulosetribenzylether, Cellulose-trisphenylcarbamat, Cellulose-tris-3-chlorobenzoat, Amylosetris-(3,5-dlmethylphenylcarbamat), Cellulose-tris-(3,5-dimethylbenzoat), Cellulose-tris-(3,5-dimethylphenylcarbamat); siehe EP 0147 804, EP 0 155 637, EP 0 718 625);
c) Cyclodextrine und seine Derivate (z.B. J. High Resol.Chrom. & Chromat. Comm. **3**, Seiten 147 - 148 (1984); EP 0 407 412; EP 0 445 604);
d) Polymere mit Asymmetriezentren in der Seitenkette (z.B. EP 0 249 078; EP 0 282 770; EP 0 448 823).

Einzelheiten der Herstellung der verschiedenen Sorbentien und deren Verwendung können den oben genannten Druckschriften entnommen werden.
Die oben genannten nicht-partikulären Sorbentien können in Vorrichtungen zur Stofftrennung enthalten sein, die sich im wesentlichen wie chromatographische Säulen handhaben lassen.

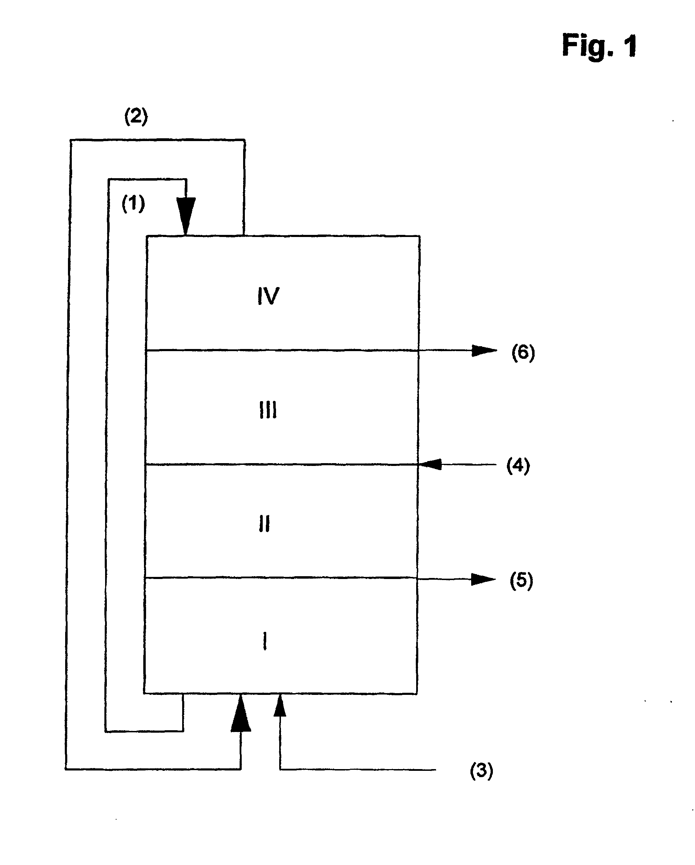

In Abbildung 1 ist das Verfahren der Gegenstromchromatographie, das die Grundlage der "simulated moving bed"-Chromatographie (SMB-Chromatographie) darstellt, schematisch dargestellt. Darin bedeutet (1) den Strom des Sorbens. Im SMB-Verfahren wird der physikalisch nur schwer zu realisierende Strom des Sorbens simuliert durch cyclisches Umschalten von Mehrwegeventilen, welche mehrerer zu einem Kreislauf geschaltete Säulen verbinden.

Die experimentelle Realisierung der Trennung wurd auf einer SMB-Anlage ausgeführt, die nach dem nachfolgend erläuterten Vier-Zonen-Modell arbeitet. Erfindungsgemäß können auch SMB-Anlagen verwendet werden, die nach anderen Modellen, z.B. dem Drei-Zonen-Modell arbeiten. Geeignete Verfahrensvarianten sind dem Fachmann aus der Literatur bekannt.

Durch das Gegenstromprinzip ist die SMB für die Auftrennung von Zweistoffgemischen (z.B. die beiden Enantiomere eines Racemates) in idealer Weise geeignet. Aber auch für andere chromatographische Trennverfahren sind SMB-Verfahren bekannt. So wird in J. Chromatogr. **719**, Seiten 267 - 274 (1996) die Anwendung eines SMB-Verfahrens auf die Reinigung von monoklonalen Antikörpern beschrieben. Auch für die Trennung von Mehrstoffgemischen sind SMB-Verfahren verwendbar. Eine solche Trennung ist beispielsweise in Biosci. Biotech. Biochem. **56**, Seiten 801 - 802 (1992) beschrieben. Verfahrensparameter für andere Trennungen kann der Fachmann durch Optimierung festlegen.

Trennungen nach dem SMB-Verfahren werden im folgenden beispielhaft für Trennungen zweier Substanzen erläutert:

Die kontinuierliche Arbeitsweise des SMB Verfahrens, wie es beispielhaft in Abbildung 1 schematisch dargestellt ist, erlaubt die Einstellung eines zeitlich stationären Zustandes bei dem kontinuierlich Eluent (3), sowie eine Lösung des zu trennenden Zweistoffgemisches (Feed; (4)) dem System zugeführt und ebenso kontinuierlich die beiden getrennten Komponenten (Raffinat (6) und Extrakt (5)) aus dem System herausgeführt werden können. Das Zu- und Herausführen der genannten Stoffströme erfolgt mit Hilfe von 4 Pumpen (nicht dargestellt). Der Hauptstrom des Eluenten (2) wird mit einer weiteren Pumpe im Kreislauf geführt (Recycling-Pumpe; nicht dargestellt). Da deshalb dem System nur eine geringere Menge an frischem Eluenten zugeführt werden muß (Feed + Eluent$_{(neu)}$ = Raffinat + Extrakt), ist der Lösungsmittelverbrauch pro Produkteinheit bei der SMB deutlich geringer als im Falle der Batch-Chromatographie. Das Säulenbett einer stationären Phase unterteilt sich bei der SMB in 4 Zonen (je eine Adsoprtions- und Desorptionszone für die beiden zu trennenden Komponenten), welche relativ zu den Zufuhr- und Auslaßpunkten definiert sind:

Zone I     - zwischen Eluent- und Extrakt-Leitung
Zone II    - zwischen Extrakt- und Feed-Leitung
Zone III   - zwischen Feed- und Raffinat-Leitung
Zone IV   - zwischen Raffinat und Eluent-Leitung

Im Falle der Trennung von Zweistoffgemischen lassen sich nun Bedingungen, d.h. Flußraten in den Zonen I-IV, finden, bei denen sich die schwächer retinierte Komponente mit der mobilen Phase und die stärker retinierte Komponente mit der stationären Phase bewegt. Die getrennten Komponenten können dann in reiner Form mit dem Extrakt- beziehungweise Raffinat-Strom entnommen werden.

Es ist technisch nur sehr schwer möglich, eine tatsächliche Bewegung einer stationären Phase (1) zu realisieren. Deshalb wird diese Bewegung der stationären Phase simuliert. Dazu wird das gesamte Säulenbett in zyklisch hintereinandergeschaltete Einzelsäulen unterteilt. Die Gesamtzahl der Säulen ist ein Vielfaches der Zahl 4, da das System, wie oben erwähnt, 4 chromatographische Zonen besitzt. Zwischen den Einzelsäulen befinden sich je 4 Zweiwegeventile, die eine Verbindung zu den 4 Zufuhr- und Auslaßleitungen darstellen. Aufgrund dieser Ventile, kann also jeder Punkt zwischen den Säulen jede Funktion (Eluent-, Feed-Zufuhr oder Raffinat- bez. Extrakt-Auslaß) einnehmen. Zu einem gegebenen Zeitpunkt definiert die Lage der 4 Zufuhr- und Auslaß-Leitungen die 4 chromatographischen Zonen. Wird nun die Position der 4 Leitungen nach einer definierten Zeit um eine Säuleneinheit in Richtung der Fließmittelbewegung weitergeschaltet, so entspricht dies einer Bewegung des Säulenbettes in die entgegengesetzte Richtung. Durch Weiterschaltung der Speisepunkte in definierten Zeitabständen durchläuft damit jede Einzelsäule nacheinander alle 4 Zonen, bis die Zufuhr- und Auslaß-Leitungen wieder ihre ursprüngliche Position einnehmen und somit ein Zyklus abgeschlossen ist.

Nachdem mehrere Zyklen durchlaufen wurden, stellt sich ein stationärer Zustand ein, der es bei geeigneter Wahl der Fließgeschwindigkeiten im System und geeigneter Taktzeit für die Ventilschaltungen ermöglicht, die getrennten Produkte in reiner Form als Extrakt- und Raffinatströme abzunehmen.

Es wurde gefunden, daß bei Verwendung dieser bevorzugten Sorbentien die Flußgeschwindigkeit über einen weiten Bereich variiert werden kann, ohne daß die Trenneigenschaften dabei verschlechtert werden. Unter Ausnutzung dieser Eigenschaft ist es möglich, die Flußgeschwindigkeit an das Elutionsprofil anzupassen, ohne daß die Trennleistung verringert wird. Dadurch kann der Zeitbedarf der Trennung stark reduziert werden. Insbesondere für präparative Trennungen ergeben sich somit große Vorteile. Für die Anwendung des SMB-Verfahrens ist auch der geringe Druckabfall bei hoher Flußgeschwindigkeit relevant, da bei diesem Verfahren eine Anzahl Säulen hintereinander geschaltet werden.

Die übliche Fließgeschwindigkeit einer Säule der Dimension 25 mm Durchmesser, die mit partikulären Teilchen gepackt ist, beträgt 40 ml/min. Wie Beispiel 1 im einzelnen zeigt, lassen die nichtpartikulären Träger eine wesentlich höhere Betriebsgeschwindigkeit zu. Dadurch kann die Trennaufgabe wesentlich ökonomischer gelöst werden.

Durch Injektion steigender Konzentrationen der Komponenten (beispielsweise 100, 300, 600 µl je Komponente) und Auswertung mittels ECP-Methode (Elution by characteristic points) wie in Guiochon, Shirazi, Katti, *Fundamentals of Preparative and Nonlinear Chromatography*, Academic Press, Boston, 1994, Seite 83 f beschrieben, können die Adsorptionsisothermen der Komponenten bestimmt werden.

Beispielsweise (siehe Beispiel 2) wurden für die Komponenten A (Dimethylphthalat) und B (Dibutylphthalat) folgende modifizierten Langmuir-Isothermen gefunden:

$$\overline{C}_A = 1{,}1 \cdot C_A + \frac{0{,}0735 \cdot C_A}{1 + 0{,}000735 \cdot C_A + 0{,}0175 \cdot C_B}$$

$$\overline{C}_B = 1{,}1 \cdot C_B + \frac{1{,}75 \cdot C_B}{1 + 0{,}000735 \cdot C_A + 0{,}0175 \cdot C_B}$$

Aus den ermittelten Isothermen können nach dem in R.M.Nicoud, F.Charton, J.Chrnmatogr. **702** (1995) 97 ff beschriebenen Verfahren, beispielsweise mit Hilfe der Simulationssoftware HELP, die Trennbedingungen für ein geeignetes SMB-System bestimmt werden:

| Säulendimension [mm] | 93 * 25 |
|---|---|
| Anzahl Säulen | 8 |
| Flußrate Feed [ml/min] | 1,9 |
| Feedkonzentration [g/l] | 320 +320 |
| Flußrate Recycling [ml/min] | 44,1 |
| Flußrate Raffinat [ml/min] | 2,9 |
| Flußrate Extrakt [ml/min] | 21,8 |
| Zyklussschaltzeit [min] | 2,24 |
| Konzentration Raffinat [g/l] | 209,7 |
| Konzentration Extrakt [g/l] | 27,89 |
| Reinheiten Raffinat/Extrakt | > 99,9 |

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

**Beispiele**

Die Beispiele 1 und 2, obwohl nicht erfindungsgemäß, sollen ebenso wie das Beispiel 3 die Erfindung verdeutlichen.

**Beispiel 1: Trennung von Toluol, 2-Nitroacetanilid und 3-Nitroacetanilid bei verschiedenen Fließgeschwindigkeiten**

Eine Probe enthaltend Toluol, 2-Nitroacetanilid und 3-Nitroacetanilid wird bei unterschiedlichen Fließgeschwindigkeiten der mobilen Phase getrennt:

| Bedingungen: | |
|---|---|
| Sorbens | monolithisches Sorbens (SiO$_2$; 93 * 25 mm) |
| mobile Phase | n-Heptan/Dioxan (90/10; v/v) |
| Probenvolumen | 40 µl |
| Detektion | UV 254 nm |
| Flußrate | 40, 130, 200 ml/min |

| | Abb. 2a | Abb. 2b | Abb. 2c |
|---|---|---|---|
| Flußrate [ml/min] | 40 | 130 | 200 |
| Bodenzahl [N] 2-Nitroacetanilid | 503 | 524 | 495 |
| Bodenzahl [N] 3-Nitroacetanilid | 465 | 465 | 445 |
| Druck [bar] | 9 | 35 | 55 |

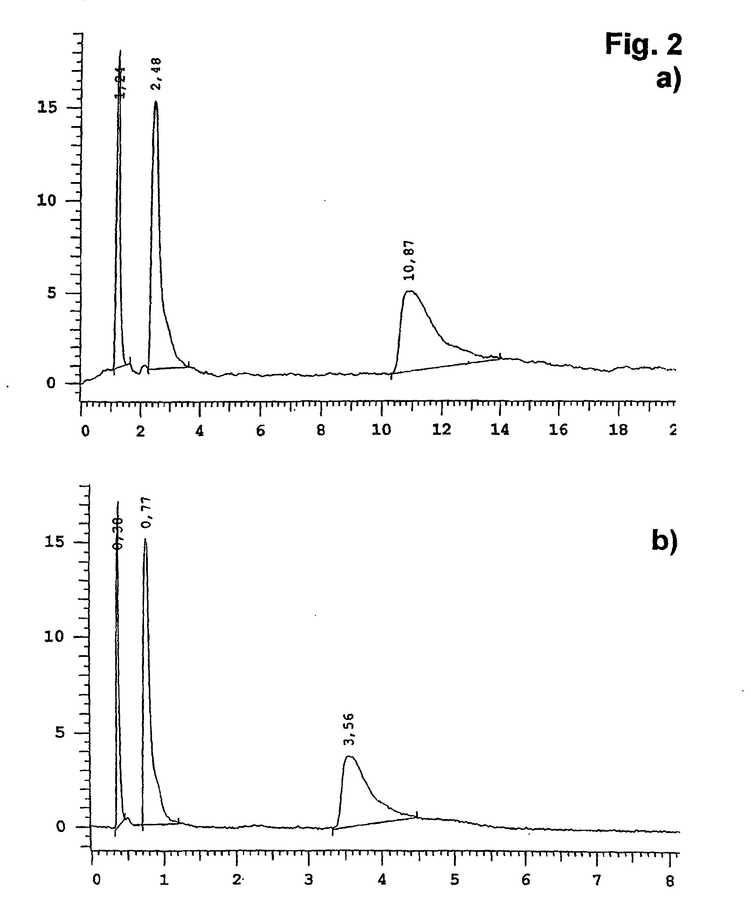

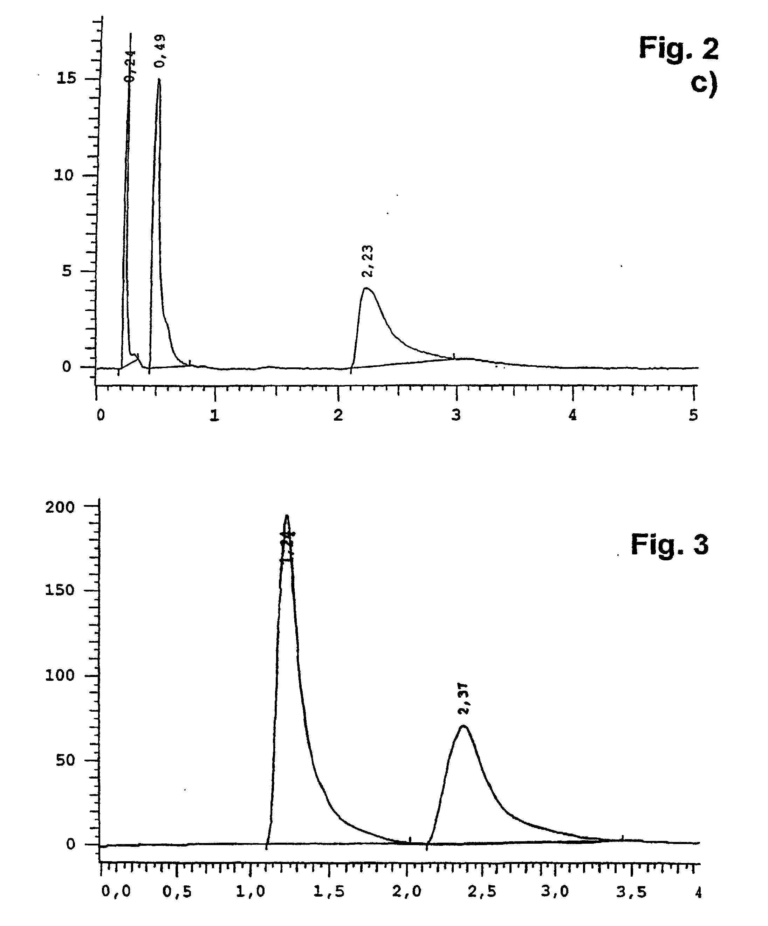

Die Ergebnisse sind in den Abbildungen 2a- 2 c zusammengefaßt. Die übliche Fließgeschwindigkeit einer Säule der Dimension 25 mm Durchmesser, die mit partikulären Teilchen gepackt ist, beträgt 40 ml/min. Die nichtpartikulären Träger lassen somit eine wesentlich höhere Betriebsgeschwindigkeit zu, was zu deutlich verbesserter Ökonomie der Trennaufgaben führt.

**Beispiel 2: Ermittlung der Prozeßparameter für eine SMB-Trennung von Dimethylphthalat und Dibutylphthalat**

Dimethylphthalat und Dibutylphthalat werden in verschiedenen Mengen aufgetragen und getrennt:

| Bedingungen: | |
|---|---|
| Sorbens | monolithisches Sorbens (C$_{18}$-RP-derivatisiertes SiO$_2$; 93*25 mm) |
| mobile Phase | Methanol/Wasser (80/20; v/v) |
| Probenvolumen | 50, 100 300, 600 µl |
| Detektion | UV 300 nm |
| Flußrate | 40 ml/min |

Für die Komponenten A (Dimethylphthalat) und B (Dibutylphthalat) wurden folgende modifizierten Langmuir-Isothermen gefunden:

$$\overline{C}_A = 1{,}1 \cdot C_A + \frac{0{,}0735 \cdot C_A}{1+0{,}000735 \cdot C_A + 0{,}0175 \cdot C_B}$$

$$\overline{C}_B = 1{,}1 \cdot C_B + \frac{1{,}75 \cdot C_B}{1+0{,}000735 \cdot C_A + 0{,}0175 \cdot C_B}$$

Aus den ermittelten Isothermen wurden nach dem in R.M.Nicoud, F.Charton, J.Chromatogr. **702** (1995) 97 beschriebenen Verfahren mit Hilfe der Simulationssoftware HELP die Trennbedingungen für die SMB-Trennung bestimmt:

| Säulendimension [mm] | 93 * 25 |
|---|---|
| Anzahl Säulen | 8 |
| Flußrate Feed [ml/min] | 1,9 |
| Feedkonzentration [g/l] | 320 +320 |
| Flußrate Recycling [ml/min] | 44,1 |

(fortgesetzt)

| | |
|---|---|
| Flußrate Raffinat [ml/min] | 2,9 |
| Flußrate Extrakt [ml/min] | 21,8 |
| Zyklusschaltzeit [min] | 2,24 |
| Konzentration Raffinat [g/l] | 209,7 |
| Konzentration Extrakt [g/l] | 27,89 |
| Reinheiten Raffinat/Extrakt | > 99,9 |

**Beispiel 3: Trennung von Chymotrypsinogen A und Lysozym**

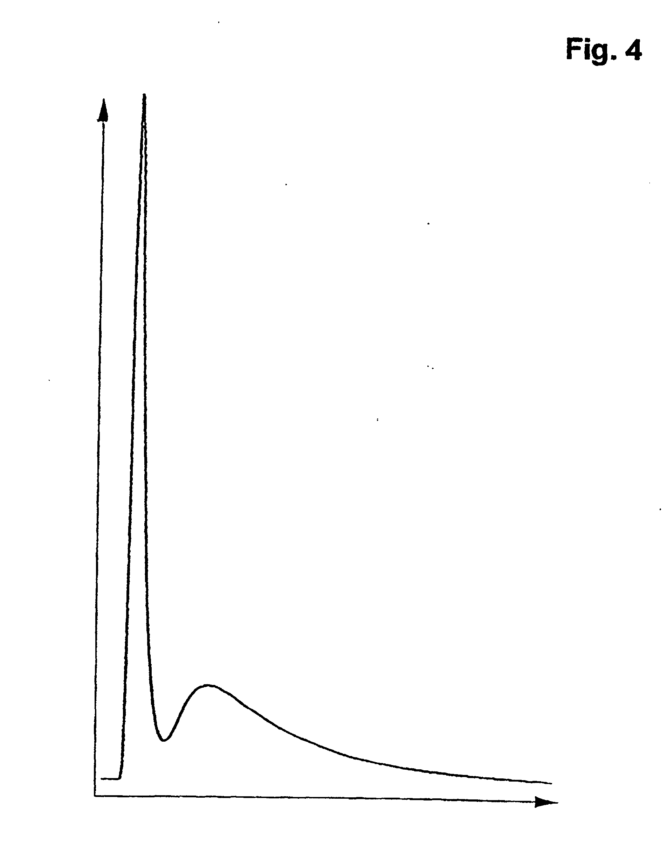

Hohlfasermodule (FRACTOSEP® $SO_3$ , Fa. Merck KGaA), wie sie in DE 195 01 726.9 offenbart werden, werden anstelle der üblichen Säulen in eine SMB-Anlage (Fa. NOVASEP) eingebaut. 100 µl einer Lösung, die Chymotrypsinogen A und Lysozym (jeweils 10 g/l) in 0,3 M NaCl und 20 mM Natriumphosphatpuffer (pH 7,0) enthält, werden aufgetragen und isokratisch entwickelt. Die Verfahrensparameter werden nach Bestimmung der Adsorptionsparameter durch das Programm "HELP", das Teil der Anlagensteuerung ist, ermittelt. Das Elutionsdiagramm ist in Abbildung 4 dargestellt.

**Patentansprüche**

1.   Verfahren zur Trennung mindestens zweier Substanzen nach dem "simulated moving bed" - Verfahren an einer Membran als Sorbens, **dadurch gekennzeichnet, daß** die Membran nach den folgenden Reaktionsschritten hergestellt wird:

a) Bereitstellen einer im wesentlichen aus Polyamid bestehenden Membran als Basispolymer;
b) Einführen von polymerisierbaren Doppelbindungen in das Basispolymer aus Schritt a) durch Umsetzung der Aminogruppen des Polyamids mit einer aminoreaktiven Verbindung, die eine polymerisierbare Doppelbindung enthält, oder durch Umsetzung der Carboxylgruppen des Polyamids mit einer carboxylgruppenreaktiven Verbindung, die eine polymerisierbare Doppelbindung enthält;
c) Polymerisation von Monomeren auf das nach Schritt b) derivatisierte Polyamid, wobei die genannten Monomere eine Epoxidgruppe, eine Azlactongruppe oder eine Vorläufergruppe für eine Azlactongruppe oder einen Separationseffektor enthalten;
d) optionale Umsetzung der Polymer-modifizierten Membran aus Schritt c) mit Separationseffektoren.

2.   Verwendung von Membranen als Sorbens für Trennverfahren nach dem "simulated moving bed" - Verfahren, **dadurch gekennzeichnet, daß** das Sorbens nach den folgenden Reaktionsschritten hergestellt wird:

a) Bereitstellen einer im wesentlichen aus Polyamid bestehenden Membran als Basispolymer;
b) Einführen von polymerisierbaren Doppelbindungen in das Basispolymer aus Schritt a) durch Umsetzung der Aminogruppen des Polyamids mit einer aminoreaktiven Verbindung, die eine polymerisierbare Doppelbindung enthält, oder durch Umsetzung der Carboxylgruppen des Polyamids mit einer carboxylgruppenreaktiven Verbindung, die eine polymerisierbare Doppelbindung enthält;
c) Polymerisation von Monomeren auf das nach Schritt b) derivatisierte Polyamid, wobei die genannten Monomere eine Epoxidgruppe, eine Azlactongruppe oder eine Vorläufergruppe für eine Azlactongruppe oder einen Separationseffektor enthalten;
d) optionale Umsetzung der Polymer-modifizierten Membran aus Schritt c) mit Separationseffektoren.

**Claims**

1.   Process for separating at least two substances by the simulated moving bed method over a membrane as sorbent, **characterized in that** the membrane is produced by the following reaction steps:

a) provision of a membrane consisting essentially of polyamide as base polymer;

b) introduction of polymerizable double bonds into the base polymer from step a) by reaction of the amino groups of the polyamide with an amino-reactive compound containing a polymerizable double bond or by reaction of the carboxyl groups of the polyamide with a carboxyl-reactive compound containing a polymerizable double bond;

c) polymerization of monomers onto the polyamide modified in step b), with the monomers containing an epoxide group, an azlactone group or a precursor group for an azlactone group or a separation effector;

d) optional reaction of the polymer-modified membrane from step c) with separation effectors.

2. Use of membranes as sorbents for separation processes by the simulated moving bed method, **characterized in that** the sorbent is produced by the following reaction steps:

a) provision of a membrane consisting essentially of polyamide as base polymer;

b) introduction of polymerizable double bonds into the base polymer from step a) by reaction of the amino groups of the polyamide with an amino-reactive compound containing a polymerizable double bond or by reaction of the carboxyl groups of the polyamide with a carboxyl-reactive compound containing a polymerizable double bond;

c) polymerization of monomers onto the polyamide modified in step b), with the monomers containing an epoxide group, an azlactone group or a precursor group for an azlactone group or a separation effector;

d) optional reaction of the polymer-modified membrane from step c) with separation effectors.

## Revendications

1. Procédé pour la séparation d'au moins deux substances selon le procédé "simulated moving bed", sur une membrane comme sorbant, **caractérisé en ce que** la membrane est réalisée selon les étapes réactionnelles suivantes :

a) préparation d'une membrane constituée essentiellement de polyamide comme polymère de base,

b) introduction de doubles liaisons polymérisables dans le polymère de base provenant de l'étape a) par réaction des groupes amino du polyamide avec un composé réagissant avec les groupes amino et contenant une double liaison polymérisable ou par réaction des groupes carboxyliques du polyamide avec un composé réagissant avec les groupes carboxyliques et contenant une double liaison polymérisable,

c) polymérisation des monomères sur le polyamide dérivé selon l'étape b), lesdits monomères contenant un groupe époxyde, un groupe azolactone ou un groupe précurseur d'un groupe azolactone ou un effecteur de séparation,

d) réaction optionnelle de la membrane modifiée par des polymères provenant de l'étape c) avec des effecteurs de séparation.

2. Utilisation des membranes comme sorbant pour le procédé de séparation selon le procédé "simulated moving bed", **caractérisée en ce que** le sorbant est obtenu selon les étapes réactionnelles suivantes :

a) préparation d'une membrane constituée essentiellement de polyamide comme polymère de base,

b) introduction de doubles liaisons polymérisables dans le polymère de base provenant de l'étape a) par réaction des groupes amino du polyamide avec un composé réagissant avec les groupes amino et contenant une double liaison polymérisable ou par réaction des groupes carboxyliques du polyamide avec un composé réagissant avec les groupes carboxyliques et contenant une double liaison polymérisable,

c) polymérisation des monomères sur le polyamide dérivé selon l'étape b), lesdits monomères contenant un groupe époxyde, un groupe azolactone ou un groupe précurseur d'un groupe azolactone ou un effecteur de séparation,

d) réaction optionnelle de la membrane modifiée par des polymères provenant de l'étape c) avec des effecteurs de séparation.

**Fig. 1**

**Fig. 2**
a)

b)

**Fig. 2**
**c)**

**Fig. 3**

**Fig. 4**